# EUROPÄISCHE PATENTSCHRIFT

(11) **EP 2 874 862 B1**
(45) Veröffentlichungstag und Bekanntmachung des Hinweises auf die Patenterteilung: **06.09.2017**
(21) Anmeldenummer: 13741690.5
(22) Anmeldetag: 02.07.2013
(51) Int. Cl.: B62D 1/10, B62D 5/00, G05G 5/00

(54) **ARRETIERUNGSEINRICHTUNG ZUM ARRETIEREN EINER BEWEGBAREN KOMPONENTE**
LOCKING DEVICE FOR LATCHING A MOBILE COMPONENT
DISPOSITIF DE VEIRROUILLAGE POUR ARRÊTER UN COMPOSANT MOBILE

(30) Priorität: 18.07.2012 DE 102012212634; 25.10.2012 DE 102012219548
(43) Veröffentlichungstag der Anmeldung: 27.05.2015
(73) Patentinhaber: Takata AG, 63743 Aschaffenburg (DE)
(72) Erfinder: MARKFORT, Dieter, 13088 Berlin (DE)
(74) Vertreter: Maikowski & Ninnemann Patentanwälte Partnerschaft mbB
(86) Internationale Anmeldenummer: PCT/EP2013/063904
(87) Internationale Veröffentlichungsnummer: WO 2014/012785

(56) Entgegenhaltungen:
- EP-A1- 1 747 970
- DE-A1-102010 037 384

## Beschreibung

Die Erfindung betrifft einen Überlagerungsantrieb für eine Überlagerungslenkung eines Kraftfahrzeugs mit einer Arretierungseinrichtung zum Arretieren einer bewegbaren Komponente gemäß Anspruch 1.

Beim Betrieb einer Arretierungseinrichtung eines Überlagerungsantriebs kann es zu unerwünschten Geräuschentwicklungen kommen, insbesondere, wenn ein Arretierelement der Arretierungseinrichtung in eine Arretier- oder eine Freigabeposition (d.h. in eine seiner Endpositionen) bewegt wird, um das Arretierelement zur Arretierung eines drehenden Antriebes des Überlagerungsantriebs mit diesem mechanisch in Eingriff zu bringen oder um den drehenden Antrieb freizugeben. Die Geräuschentwicklung kann sowohl von dem zwischen der Arretier- und Freigabeposition hin- und herbewegten Arretierelement als auch von Komponenten verursacht werden, die das Arretierelement antreiben. Besonders störend können Geräusche im unmittelbaren Hörbereich einer Person (in deren unmittelbarer Umgebung) sein, wie sie z.B. bei einem in einem Lenkrad eines Kraftfahrzeuges angeordneten Überlagerungsantrieb entstehen können. Das Problem der Geräuschentstehung besteht natürlich nicht nur bei der Arretierung eines Überlagerungsantriebes, sondern es stellt sich generell bei der Arretierung einer bewegbaren Komponente, z.B. auch bei der Arretierung einer sich linear bewegenden Komponente.

Aus der DE 10 2010 037 384 A1 ist eine Verriegelungsvorrichtung für eine Überlagerungslenkung mit einem elektromagnetischen Aktuator bekannt. Letzterer treibt einen als Arretierelement dienenden Sperrstift an. Zur Vermeidung eines unmittelbaren mechanischen Kontaktes zwischen dem Sperrstift und anderen Komponenten des Aktuators sind in den Endlagen des Sperrstiftes elastische O-Ringe vorgesehen. Nachteilig einer derartigen Anordnung ist, dass die O-Ringe lediglich einen geringen Deformationsweg zur Verfügung stellen, was einer Gestaltung des Kraftverlaufes beim Abbremsen des Arretierelementes Grenzen setzt. Die in der erwähnten Druckschrift weiterhin vorgeschlagene Verwendung von Luft- bzw. Öldämpfern sind teuer. Auch der erforderliche Platzbedarf kann hoch sein, was gerade bei im Lenkrad angeordneten Überlagerungsantrieben zu Bauraumproblemen führen kann.

Die DE 10 2010 037 384 A1 offenbart einen Überlagerungsantrieb für eine Überlagerungslenkung eines Kraftfahrzeugs mit einer bewegbaren Komponente und einer Arretierungseinrichtung, wobei die Arretierungseinrichtung aufweist:
- ein zwischen einer Arretier- und einer Freigabeposition hin- und her bewegbares Arretierelement, das in der Arretierposition mit der bewegbaren Komponente zusammenwirkt,
- einen Aktuator zum Bewegen des Arretierelementes aus der Freigabe- in die Arretierposition oder umgekehrt,
- eine Dämpfungseinrichtung, die eine Bewegung des Arretierelementes in die Freigabeposition dämpft.

Der Erfindung liegt die Aufgabe zugrunde, einen Überlagerungsantrieb für eine Überlagerungslenkung eines Kraftfahrzeugs mit einer Arretierungseinrichtung zum Arretieren einer bewegbaren Komponente mit möglichst geringem Betriebsgeräusch bereitzustellen.

Diese Aufgabe wird durch die Bereitstellung eines Überlagerungsantriebs mit einer Arretierungseinrichtung mit den Merkmalen des Anspruchs 1 gelöst. Weiterbildungen der Erfindung sind in den abhängigen Ansprüchen angegeben.

Danach wird ein Überlagerungsantrieb einer Überlagerungslenkung mit einer Arretierungseinrichtung zum Arretieren einer bewegbaren Komponente bereitgestellt, mit
- einem zwischen einer Arretier- und einer Freigabeposition hin- und her bewegbaren Arretierelement, das in der Arretierposition mit der bewegbaren Komponente zusammenwirkt;
- einem Aktuator zum Bewegen des Arretierelementes aus der Freigabe- in die Arretierposition oder umgekehrt,
- wobei der Aktuator und das Arretierelement gemeinsam in einem Gehäuse der Arretierungseinrichtung angeordnet sind, wobei der Aktuator der Arretierungseinrichtung und zumindest ein Teilabschnitt des als Arretierelement agierenden Arretierbolzens sich im Innern des Gehäuses befinden, wobei der Arretierbolzen in Arretierposition mit einem ersten Ende aus einer ersten Öffnung des Gehäuses und in Freigabeposition mit einem zweiten Ende aus einer zweiten Öffnung hinausragt; und
- einer Dämpfungseinrichtung, die eine Bewegung des Arretierelementes in die Freigabeposition dämpft,
- wobei die Dämpfungseinrichtung ein Dämpfungselement mit einem Dämpfungsabschnitt aufweist, der sich außerhalb des Gehäuses der Arretierungseinrichtung befindet,
- und wobei die Arretierungseinrichtung so beschaffen ist, dass bei einer Bewegung des Arretierelementes in die Freigabeposition ein Ende des Arretierelementes sich aus dem Gehäuse der Arretierungseinrichtung heraus- oder von diesem wegbewegt und auf den Dämpfungsabschnitt auftrifft.

Die Arretierungseinrichtung dient dazu, einen Überlagerungsantrieb einer Überlagerungslenkung eines Fahrzeugs durch mechanische Einwirkung zu arretieren; z.B. um bei einer Fehlfunktion des Überlagerungsantriebes ein Einleiten eines Lenkwinkels in die Lenkwelle durch den Überlagerungsantrieb zu verhindern. Eine mögliche Ausgestaltung des Überlagerungsantriebes sowie dessen Befestigung am Lenkrad und mit der Lenkwelle sind z. B. in der WO 2010/11 57 07 A1 beschrieben, auf die insofern ausdrücklich Bezug genommen wird.

Das Arretierelement ist insbesondere ein längliches Element, das im montierten Zustand und in seiner Arretierposition mit einer bewegbaren Komponente in Form eines rotierbaren Elementes (z.B. in Form einer Arretierscheibe) des Überlagerungsantriebes zusammenwirkt, wobei die Arretierscheibe drehfest mit einer Antriebsschnecke (insbesondere mit einem aus dem Gehäuse des Überlagerungsantriebes herausragenden freien Ende der Antriebsschnecke) gekoppelt ist. Die Arretierscheibe weist z.B. entlang ihres äußeren Umfanges Aussparungen auf, in die ein aus dem Gehäuse der Arretierungseinrichtung herausgreifendes (erstes) freies Ende des Arretierelementes eingreift und die Arretierscheibe insbesondere vorwiegend formschlüssig verriegelt, so dass auch die mit der Arretierscheibe gekoppelte Antriebsschnecke blockiert ist. Die Freigabeposition ist insbesondere eine weitere Endposition des Arretierelementes, in der das Arretierelement seinen größten Abstand zu der zu arretierenden bewegbaren Komponente einnimmt.

Im Zusammenhang mit der Ausgestaltung des Arretierelementes und einer Vorrichtung zum Bewegen des Arretierelementes wird auf die WO 2012/120079 verwiesen, auf die insofern ausdrücklich Bezug genommen wird.

Das Arretierelement erstreckt sich mit einem Abschnitt innerhalb einer von dem Gehäuse ausgebildeten Aufnahme (in Form etwa eines Hohlraumes), wobei zumindest in der Arretierposition sein erstes (freies) Ende des Arretierelementes und in der Freigabeposition sein zweites (freies) Ende des Arretierelementes aus Öffnungen des die Aufnahme begrenzenden Gehäuses hinausragen. Denkbar ist natürlich auch, dass sich unabhängig von der Position des Arretierelementes sowohl sein erstes als auch sein zweites Ende außerhalb des Gehäuses befinden.

Die Anordnung des Dämpfungselementes extern (d.h. außerhalb des Gehäuses der Arretierungseinrichtung) ermöglicht insbesondere eine kompakte Ausgestaltung der Arretierungseinrichtung und somit deren platzsparende Anordnung in einem Lenkrad.

Das Dämpfungselement (zumindest dessen Dämpfungsabschnitt) der Arretierungseinrichtung ist insbesondere elastisch ausgebildet, wobei es z.B. ein elastisches Material (etwa ein Elastomer) aufweist oder aus einem elastischen Material gebildet ist. Möglich ist auch, dass das Dämpfungselement in Form einer Feder ausgeformt ist. Bei dem Dämpfungselement handelt es sich insbesondere um ein einstückiges Bauteil (etwa um ein Formteil). Die Ausführung des Dämpfungselementes als einstückiges Bauteil (insbesondere als Formelement), das neben der Dämpfung des Arretierelementes bei einer Bewegung in die Freigabeposition weitere Funktionen übernehmen kann (s.u.), stellt insbesondere eine kostengünstige Möglichkeit zur Gestaltung einer möglichst guten Dämpfung des Arretierelementes (und z.B. auch weiterer mit dem Arretierelement zusammenwirkender bewegbarer Teile der Arretierungseinrichtung) bei einer Bewegung in die Freigabeposition (und z.B. auch bei einer Bewegung in die Arretierposition) dar.

Darüber hinaus kann das Dämpfungselement beabstandet zu dem Gehäuse der Arretierungseinrichtung (insbesondere zu einer von dem Gehäuse ausgebildeten Aufnahme, in der sich ein Teilabschnitt des Arretierelementes erstreckt) angeordnet sein. Denkbar ist auch, dass das Gehäuse einen Befestigungsbereich ausbildet, an dem das Dämpfungselement festgelegt ist, wobei sich der Befestigungsbereich insbesondere in einem Abstand zu einem Hauptbereich des Gehäuses, das die Aufnahme für das Arretierelementes bildet, befindet.

Der Befestigungsbereich ist insbesondere durchgehend (massiv) und z.B. einstückig mit dem Hauptbereich des Gehäuses ausgebildet; beispielsweise in Form eines Vorsprunges, der sich insbesondere entlang der Erstreckungsrichtung des Arretierelementes von dem Hauptbereich des Gehäuses weg erstreckt. Denkbar ist auch, dass das Dämpfungselement mit einem Befestigungsabschnitt an dem Befestigungsbereich des Gehäuses festgelegt ist und sich z.B. durch den Befestigungsbereich des Gehäuses hindurch oder in den Befestigungsbereich hinein erstreckt (s.u.). Der Dämpfungsabschnitt des Dämpfungselementes, auf den das Arretierelement auftrifft, befindet sich jedoch außerhalb des Gehäuses.

Gemäß einer weiteren Ausgestaltung der Erfindung weist das Dämpfungselement wie bereits erwähnt einen Befestigungsabschnitt auf, über den es an dem Gehäuse der Arretierungseinrichtung und/oder an einem Gehäuse der zu arretierenden bewegbaren Komponente (z.B. einem Gehäuse eines Überlagerungsantriebes) festlegbar ist. Das Gehäuse der Arretierungseinrichtung weist z.B. einen Befestigungsbereich mit einer Durchgangsöffnung auf, wobei der Befestigungsabschnitt des Dämpfungselementes eine umlaufende Nut umfasst, in die der Rand der Durchgangsöffnung des Befestigungsbereichs des Gehäuses eingreift.

Die umlaufende Nut wird z.B. durch einen Rand einer Durchgangsöffnung des Befestigungsabschnitts des Dämpfungselementes ausgebildet, wobei die Nut etwa in einer die Durchgangsöffnung begrenzenden (insbesondere hohlzylindrischen) Seitenwand ausgeformt ist.

Gemäß einer anderen Weiterbildung der Erfindung erstreckt sich der Dämpfungsabschnitt des Dämpfungselementes unter einem Winkel zu dem Befestigungsabschnitt des Dämpfungselementes. Der Dämpfungsabschnitt umfasst z.B. zwei zueinander beabstandete Schenkel, die über einen Verbindungsbereich miteinander verbunden sind, wobei das Arretierelement bei einer Bewegung in die Freigabeposition auf den Verbindungsbereich auftrifft. Die Schenkel verlaufen insbesondere unter einem Winkel zu dem Arretierelement (d.h. zu einer Haupterstreckungsrichtung des Arretierelementes) oder zu einer Bewegungsrichtung des Arretierelementes. Entsprechend kann der Verbindungsbereich in Form eines flächigen Elementes (etwa in Form eines flächigen Steges) ausgebildet sein, das sich insbesondere ebenfalls unter einem Winkel (z.B. zumindest näherungsweise senkrecht) zu dem Arretierelement erstreckt.

Denkbar ist auch, dass sich das Dämpfungselement - wenn die Arretierungseinrichtung an einer die zu arretierende bewegbare Komponente umfassende Vorrichtung (etwa einem Überlagerungsantrieb) montiert ist - über die Schenkel an einem (insbesondere ebenfalls unter einem Winkel zum Arretierelement verlaufenden) Abschnitt eines Gehäuses der Vorrichtung abstützt. Beim Auftreffen des (zweiten) Endes des Arretierelementes auf den Verbindungsbereich des (insbesondere einteiligen) Dämpfungselementes werden die Schenkel und/oder der Verbindungsbereich insbesondere elastisch verformt.

Darüber hinaus kann der Befestigungsabschnitt des Dämpfungselementes so ausgebildet sein, dass die Arretierungseinrichtung über das Dämpfungselement elastisch an einem Gehäuse einer die zu arretierende bewegbare Komponente umfassenden Vorrichtung (etwa eines Überlagerungsantriebes) gelagert werden kann. Somit können dem Dämpfungselement zwei Funktionen zukommen, nämlich einerseits, die Bewegung des Arretierelementes in die Freigabeposition zu dämpfen, um einer mit dieser Bewegung verbundenen Geräuschentwicklung entgegenzuwirken, und andererseits, eine elastische Lagerung der gesamten Arretierungseinrichtung an dem Gehäuse der Vorrichtung mit der bewegbaren Komponente zu realisieren, um die Geräuschentwicklung beim Betrieb der Arretierungseinrichtung, insbesondere bei einem Bewegen des Arretierelementes auch in die Arretierstellung, zu reduzieren.

Darüber hinaus ist möglich, dass ein Befestigungselement (z.B. in Form eines Bolzens oder einer Schraube) eine Durchgangsöffnung eines (wie oben beschriebenen) Befestigungsbereiches des Gehäuses der Arretierungseinrichtung sowie eine Durchgangsöffnung eines (wie oben ebenfalls beschriebenen) Befestigungsabschnitts des Dämpfungselementes durch- und in eine Befestigungsöffnung eines Gehäuses des Überlagerungsantriebs eingreift. In dieser Variante wird das Dämpfungselement somit sowohl an dem (z.B. als Vorsprung ausgebildeten) Befestigungsbereich des Gehäuses der Arretierungseinrichtung als auch an dem Gehäuse des Überlagerungsantriebs festgelegt.

Die bewegbare Komponente befindet sich insbesondere außerhalb eines Gehäuses der Arretierungseinrichtung.

Die Erfindung wird im Folgenden anhand von Ausführungsbeispielen unter Bezugnahme auf die Figuren näher erläutert. Es zeigen:
- Fig. 1: einen Teil eines Lenkrades mit einem erfindungsgemäßen Überlagerungsantrieb, der eine Arretierungseinrichtung umfasst;
- Fig. 2: eine Schnittansicht des Dämpfungselementes der in Fig. 1 dargestellten Arretierungseinrichtung;
- Fig. 3: einen Ausschnitt der Fig. 1, wobei sich das Arretierelement der Arretierungseinrichtung in Freigabeposition befindet;
- Fig. 4A: eine Schnittansicht des Dämpfungselementes der Arretierungseinrichtung aus Fig. 1, wobei sich das Arretierelement nicht in Freigabeposition befindet; und
- Fig. 4B: das Dämpfungselement aus Fig. 4A nach Bewegen des Arretierelementes in die Freigabeposition.

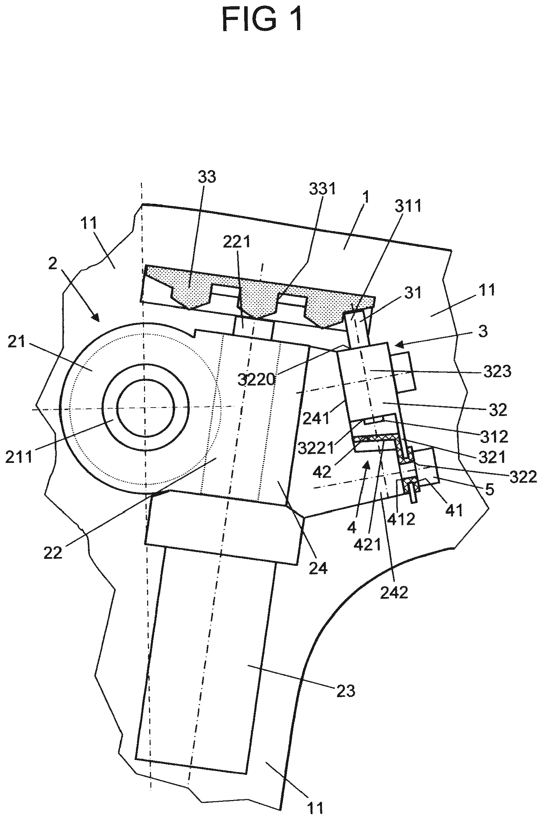

Figur 1 zeigt einen Ausschnitt eines Lenkrades 1 eines Kraftfahrzeuges, in dessen Naben- und/oder Speichenbereich (aufweisend drei Speichen 11) ein Überlagerungsantrieb 2 angeordnet ist, mit dem einer Lenkwelle des Fahrzeuges ein zusätzlicher Lenkwinkel aufgeprägt werden kann, der einem durch Drehen eines Lenkradkranzes des Lenkrades in die Lenkwelle eingeleiteten Lenkwinkel überlagert wird.

Der Überlagerungsantrieb 2 ist insbesondere an einer dem Fahrer abgewandten Seite des Lenkrades 1 angeordnet und weist eine mit einem Schneckenrad 21 kämmende Antriebsschnecke 22 auf. Das Schneckenrad 21 ist über einen Fortsatz 211, der aus einem Gehäuse 24 des Überlagerungsantriebes 2 herausragt, mit der Lenkwelle des Fahrzeugs gekoppelt, so dass eine Drehbewegung des Schneckenrades 21 auf die Lenkwelle übertragen wird. Der Antrieb der Antriebsschnecke 22 erfolgt über einen Aktuator 23, der insbesondere in Form eines Elektromotors ausgebildet ist. Mögliche Ausgestaltungen weiterer Komponenten des in Figur 1 gezeigten Überlagerungsantriebes sowie dessen Befestigung am Lenkrad und mit der Lenkwelle sind z. B. in der oben bereits erwähnten WO 2010/11 57 07 A1 beschrieben.

Das Lenkrad 1 weist des Weiteren eine zu dem Überlagerungsantrieb 2 separate Arretierungseinrichtung 3 auf, die dazu dient, den Überlagerungsantrieb 2 durch mechanische Einwirkung zu arretieren; beispielsweise, um bei einem Ausfall des Überlagerungsantriebes bzw. in dessen nicht aktivem Zustand ein sicheres Einleiten eines Lenkwinkels in die Lenkwelle durch ein vom Fahrer über den Lenkradkranz des Lenkrades aufgebrachtes Drehmoment zu gewährleisten.

Die Arretierungseinrichtung 3 weist ein Arretierelement in Form eines Arretierbolzens 31 auf, der über einen (z. B. elektromagnetischen) Aktuator axial aus einer Freigabeposition in die in Figur 1 dargestellte Arretierposition bewegbar ist. Dies geschieht z.B. durch eine Unterbrechung der Stromzufuhr (Deaktivierung) zu einem Elektromagneten (nicht dargestellt) des Aktuators, wodurch eine auf den Arretierbolzen 31 ausgeübte Haltekraft wegfällt und der Arretierbolzen 31 unter der Wirkung von Federelemente (ebenfalls nicht dargestellt) in die Arretierposition überführt wird. Um den Arretierbolzen 31 aus der Arretierposition wieder in die Freigabeposition zu bewegen, wird durch Bestromung (Aktivierung) des Elektromagneten des Aktuators die Haltekraft wieder aufgebaut, wodurch der Arretierbolzen 31 unter Verspannung der erwähnten Federelemente in die Freigabeposition gebracht und dort gehalten wird.

Der Aktuator der Arretierungseinrichtung 3 und zumindest ein Teilabschnitt des Arretierbolzens 31 befinden sich im Innern eines Gehäuses 32, wobei der Arretierbolzen 31 in Arretierposition mit einem ersten Ende 311 (Arretierende) aus einer ersten Öffnung 3220 des Gehäuses 32 und in Freigabeposition mit einem zweiten Ende 312 aus einer zweiten Öffnung 3221 hinausragt, wobei die Öffnungen 3220, 3221 als Führung für den Arretierbolzen 31 dienen können, d.h. der Arretierbolzen 31 kann an dem Rand der Öffnungen 3220, 3221 anliegen. Es ist jedoch auch möglich, dass zusätzliche Mittel zur Führung des Arretierbolzens 31 vorgesehen sind, z.B. von dem Gehäuse 32 separate (insbesondere in den Öffnungen 3220, 3221 angeordnete) Hülsen. In diesem Zusammenhang wird auf den Umstand hingewiesen, dass das Ende 312 des Arretierbolzens 31 bereits vor Beginn der Bewegung in die Freigabeposition aus der Öffnung 3221 hinausragen kann und sich im Fall der erwähnten Bewegung lediglich der Abstand zwischen dem Ende 312 und dem Gehäuse 32 vergrößert. Gleiches gilt selbstverständlich auch für das Ende 321 und die Öffnung 3220 im Zusammenhang mit der Bewegung in die Arretierposition.

Bei dem Arretierbolzen 31 handelt es sich insbesondere um ein einstückiges Element. Möglich ist jedoch auch, dass der Arretierbolzen 31 ein erstes Element, das das erste freie Ende 311 ausbildet, und ein zweites, zu dem ersten Element separates Element, an dem das zweite Ende 312 ausgebildet ist, umfasst, wobei die beiden Elemente fest miteinander verbunden sind.

Das Gehäuse 32 der Arretierungseinrichtung 3 liegt an einem flanschartigen Anlageabschnitt 241 des Gehäuses 24 des Überlagerungsantriebes 2 an und ist insbesondere an dem Gehäuse 24 (z.B. mittels geeigneter Befestigungselemente, etwa in Form von Schrauben) befestigt. Der Arretierbolzen 31 wirkt in seiner Arretierposition mit einer bewegbaren (rotierbaren) Komponente des Überlagerungsantriebes 2 in Form einer Arretierscheibe 33 zusammen, wobei die Arretierscheibe 33 drehfest mit einem aus dem Gehäuse 24 des Überlagerungsantriebes 2 herausragenden freien Ende 221 der Antriebsschnecke 22 gekoppelt ist. Die Arretierscheibe 33 weist zudem entlang ihres äußeren Umfanges Aussparungen 331 auf, in die das aus dem Gehäuse 32 der Arretierungseinrichtung 3 herausgreifende erste freie Ende 311 des Arretierbolzens 31 eingreift und die Arretierscheibe 33 vorwiegend formschlüssig verriegelt, so dass auch die mit der Arretierscheibe 33 gekoppelte Antriebsschnecke 22 blockiert ist.

Beim Bewegen des Arretierbolzens 31 in die Arretierposition kommt es zu einem mechanischen Kontakt des ersten Endes 311 des Arretierbolzens 31 mit der Arretierscheibe 33, d.h. zu einer Krafteinleitung in den Arretierbolzen 31, durch die z. B. Vibrationen entstehen können, die sich auf den Lenkradkranz des Lenkrades ausbreiten. Um derartige Vibrationen und eine mit den Vibrationen verbundene Geräuschentwicklung möglichst zu unterdrücken, kann das Lenkrad Lagerungsmittel aufweisen, über die die Arretierungseinrichtung 3 elastisch an dem Überlagerungsantrieb 2 gelagert ist. In diesem Zusammenhang wird z.B. ebenfalls auf die WO 2012/120079 verwiesen.

Um eine Geräuschentwicklung auch beim Bewegen des Arretierbolzens 31 in die Freigabeposition möglichst zu unterdrücken, weist die Arretierungseinrichtung 3 eine Dämpfungseinrichtung in Form eines elastischen Dämpfungselementes 4 auf, das mit einem als laschenartiger Fortsatz 321 ausgeformten Befestigungsbereich des Gehäuses 32 der Arretierungseinrichtung 3 verbunden ist. Der Fortsatz 321 steht von einem (im Wesentlichen quaderartig geformten) Hauptbereich 323 des Gehäuses 32, in dem der Arretierbolzen 31 verläuft, nach hinten (d.h. von der Arretierscheibe 33 weg) ab und erstreckt sich insbesondere im Wesentlichen eben und im Wesentlichen parallel zu dem Arretierbolzen 31. Denkbar ist, dass der Fortsatz 321 einstückig mit dem übrigen Gehäuse 32 (insbesondere mit dem Hauptbereich 323 des Gehäuses 32) verbunden ist. Möglich ist jedoch auch, dass es sich bei dem Fortsatz 321 um ein separates Teil handelt, das über Befestigungsmittel an dem Hauptbereich 323 des Gehäuses 32 festgelegt ist.

Das Dämpfungselement 4 weist einen Dämpfungsabschnitt 42 auf, der so außerhalb des Gehäuses 32 angeordnet ist, dass das zweite freie Ende 312 des Arretierbolzens bei einer Bewegung des Arretierbolzens 31 in die Freigabeposition auf den Dämpfungsabschnitt 42 auftreffen wird. Der Dämpfungsabschnitt 42 dämpft somit die Bewegung des Arretierbolzens 31 und eine mit dieser Bewegung verbundene Geräuschentwicklung.

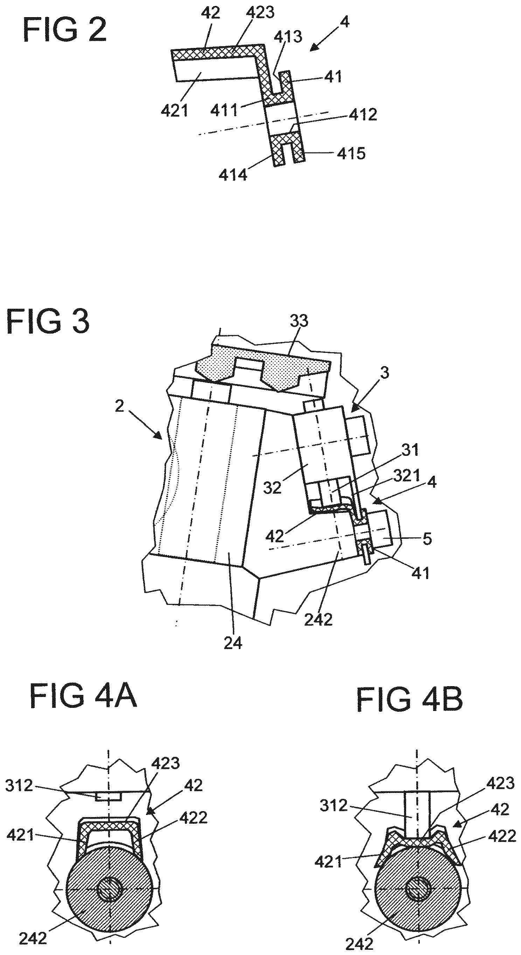

Das Dämpfungselement 4 weist darüber hinaus einen einstückig mit dem Dämpfungsabschnitt 42 verbundenen Befestigungsabschnitt 41 auf, über den es an dem Fortsatz 321 des Gehäuses 32 festgelegt ist. Genauer ist der Befestigungsabschnitt 41 hülsenartig ausgebildet und umfasst eine durch eine hohlzylindrische Seitenwand 411 begrenzte Durchgangsöffnung 412 auf (vgl. Fig. 2). In der Seitenwand 411 ist eine die Durchgangsöffnung 412 umlaufende, ringförmige Nut 413 ausgeformt, die zwei scheibenförmige Abschnitte 414, 415 des Befestigungsabschnitts 41 voneinander trennt. Die hohlzylindrische Seitenwand 411 ist so in eine Durchgangsöffnung 322 des Fortsatzes 321 des Gehäuses 32 eingesetzt, dass ein Rand der Durchgangsöffnung 322 in die Nut 413 eingreift, so dass das Dämpfungselement 4 an dem Fortsatz 321 festgelegt ist. Die scheibenförmigen Bereiche 414, 415 befinden sich dann auf unterschiedlichen Seiten des Fortsatzes 321.

Der Fortsatz 321 des Gehäuses 32 und der Befestigungsabschnitt 41 des Dämpfungselementes 4 sind wiederum mittels eines Befestigungselementes in Form einer Schraube 5, die die (insbesondere koaxialen) Durchgangsöffnungen 322, 412 durchgreift, mit einem domartig oder kegelstumpfartig ausgebildeten Verbindungsabschnitt 242 des Gehäuses 24 des Überlagerungsantriebes 2 verbunden. Die Schraube 5 ist in eine Öffnung des Verbindungsabschnitts 242 des Gehäuses 24 eingeschraubt. Des Weiteren liegt der Befestigungsabschnitt 41 des Dämpfungselementes 4 mit einer unteren, dem Fortsatz 321 des Gehäuses 32 abgewandten Seite des unteren scheibenförmigen Bereichs 414 auf einer Stirnseite des Verbindungsabschnitts 242 auf, so dass sich der untere scheibenförmige Bereich 414 zwischen dem Verbindungsabschnitt 242 einer dem Verbindungsabschnitt 242 zugewandten Unterseite des Fortsatzes 321 befindet.

Mittels des elastischen Befestigungsabschnitts 41 des Dämpfungselementes 4 wird eine elastische Lagerung des Gehäuses 32 der Arretierungseinrichtung 3 realisiert, so dass das Gehäuse 32 relativ zum Gehäuse 24 des Überlagerungsantriebes eine Ausgleichsbewegung ausführen kann, wodurch insbesondere einer Geräuschentstehung beim Bewegen des Arretierbolzens 31 in die Arretierposition entgegengewirkt wird.

Gleichzeitig dämpft das Dämpfungselement 4 wie erwähnt auch die Bewegung des Arretierbolzens 31 in die Freigabeposition. Hierzu dient der Dämpfungsabschnitt 42, auf den der Arretierbolzen 31 bei einer Bewegung in die Freigabeposition auftrifft. Der Dämpfungsabschnitt 42 erstreckt sich entsprechend unter einem Winkel zu dem Befestigungsabschnitt 41 des Dämpfungselementes 4 und somit unter einem Winkel auch zu dem Arretierbolzen 31 oder dessen Bewegungsrichtung.

Der Dämpfungsabschnitt 42 ist so ausgebildet, dass er sich beim Aufreffen des zweiten Endes 312 des Arretierbolzens 31 elastisch (reversibel) verformt, um den Arretierbolzen 31 allmählich abzubremsen. Hierzu weist der Dämpfungsabschnitt 42 zwei in einem Abstand voneinander und unter einem Winkel zu dem Arretierbolzen 31 verlaufende Schenkel 421, 422 auf, die über einen entsprechend ebenfalls unter einem Winkel zu dem Arretierbolzen 31 verlaufenden Steg (Auftrefffläche) 423 miteinander (insbesondere einstückig) verbunden sind. Damit erhält der Dämpfungsabschnitt 42 (senkrecht zur Achse der Durchgangsöffnungen 322, 412) einen im Wesentlichen U-förmigen Querschnitt.

Die Schenkel 421, 422 stützen sich jeweils mit einer dem Arretierbolzen 31 abgewandten Seite an einer dem Arretierbolzen 31 zugewandten Außenseite des Verbindungsabschnitts 242 des Gehäuses 24 des Überlagerungsantriebes 2 ab (oder liegen an diesem an). Dies ist in Fig. 4A dargestellt, wobei die Situation vor dem Auftreffen des Arretierbolzens 31 auf den Dämpfungsabschnitt 42 gezeigt ist. Beim Auftreffen des zweiten Endes 312 des Arretierbolzens 31 verformen sich der Steg 423 und die Schenkel 421, 422 (Fig. 3 und 4B).

Durch die Verformung des Steges 413 und der Schenkel 421, 422 wird ein relativ sanftes Abbremsen des Arretierbolzens 31 unter reduzierter Geräuschentwicklung bewirkt. Durch eine entsprechende Auslegung des Dämpfungsabschnitts 42 kann die durch diesen auf den Arretierbolzen 31 ausgeübte Kraft gezielt beeinflusst werden. So ist es denkbar, dass dem Arretierbolzen 31 unmittelbar nach seinem Kontakt mit dem Dämpfungsabschnitt 42 eine im Vergleich zu einem späteren Zeitpunkt seiner Bewegung in die Freigabeposition große Kraft entgegengesetzt wird, um den Arretierbolzen 31 anfänglich relativ stark abzubremsen. Erreicht wird dies z.B. durch die Gestaltung des Steges 413 der beiden Schenkel 421, 422, z.B. deren Wanddicke, deren Abstand und/oder Orientierung zueinander oder zum domartigen Verbindungsabschnitt 242 des Gehäuses 24 des Überlagerungsantriebes 2.

Im weiteren Verlauf der Bewegung des Arretierbolzens 31 in die Freigabeposition wird der Steg 423 zumindest abschnittsweise eingedrückt (eingestülpt) und die Schenkel 421, 422 laufen in entgegengesetzten Richtungen an der Außenseite des Gehäuses 24 entlang auseinander (vgl. Fig. 3 und 4B), wodurch z.B. die durch den Dämpfungsabschnitt 42 auf den Arretierbolzen 31 ausgeübte Kraft absinkt. Dadurch verringert sich auch die von dem Aktuator der Arretierungseinrichtung 3 aufzubringende Kraft (bei einem elektromagnetischen Aktuator der Strom für die Ansteuerung), die notwendig ist, um den Arretierbolzen 31 in seiner Freigabeposition zu halten. Denkbar ist, dass die Schenkel 421, 422 soweit auseinanderlaufen, dass der Steg 423 zur Anlage an der Außenseite des Verbindungsabschnitts 242 des Gehäuses 24 kommt, wenn der Arretierbolzen 31 die Freigabeposition erreicht, wie in Fig. 4B gezeigt.

### Bezugszeichenliste

- 1: Lenkrad
- 2: Überlagerungsantrieb
- 3: Arretierungseinrichtung
- 4: Dämpfungselement
- 5: Schraube
- 21: Schneckenrad
- 22: Antriebsschnecke
- 23: Aktuator
- 24: Gehäuse
- 31: Arretierbolzen
- 32: Gehäuse
- 33: Arretierscheibe
- 41: Befestigungsabschnitt
- 42: Dämpfungsabschnitt
- 211: Fortsatz
- 221: freies Ende Antriebsschnecke
- 241: Anlageabschnitt
- 242: Verbindungsabschnitt
- 311: erstes Ende
- 312: zweites Ende
- 321: Fortsatz
- 322: Durchgangsöffnung
- 323: Hauptbereich
- 331: Aussparung
- 411: Seitenwand
- 412: Durchgangsöffnung
- 413: Nut
- 414: erster scheibenförmiger Bereich
- 415: zweiter scheibenförmiger Bereich
- 421, 422: Schenkel
- 423: Steg
- 3220, 3221: Öffnung

## Patentansprüche

1. Überlagerungsantrieb für eine Überlagerungslenkung eines Kraftfahrzeugs mit einer bewegbaren Komponente (33) und einer Arretierungseinrichtung (3), wobei die Arretierungseinrichtung (3) aufweist:
- ein zwischen einer Arretier- und einer Freigabeposition hin- und her bewegbares Arretierelement (31), das in der Arretierposition mit der bewegbaren Komponente (33) zusammenwirkt;
- einen Aktuator zum Bewegen des Arretierelementes (31) aus der Freigabe- in die Arretierposition oder umgekehrt,
- wobei der Aktuator und das Arretierelement (31) gemeinsam in einem Gehäuse (32) der Arretierungseinrichtung (3) angeordnet sind, wobei der Aktuator der Arretierungseinrichtung (3) und zumindest ein Teilabschnitt des als Arretierelement agierenden Arretierbolzens (31) sich im Innern des Gehäuses (32) befinden, wobei der Arretierbolzen (31) in Arretierposition mit einem ersten Ende (311) aus einer ersten Öffnung (3220) des Gehäuses (32) und in Freigabeposition mit einem zweiten Ende (312) aus einer zweiten Öffnung (3221) hinausragt; und
- eine Dämpfungseinrichtung, die eine Bewegung des Arretierelementes (31) in die Freigabeposition dämpft, wobei die Dämpfungseinrichtung ein Dämpfungselement (4) mit einem Dämpfungsabschnitt (42) aufweist, der sich außerhalb des Gehäuses (32) der Arretierungseinrichtung (3) befindet,
**dadurch gekennzeichnet, dass**
die Arretierungseinrichtung (3) so beschaffen ist, dass bei einer Bewegung des Arretierelementes (31) in die Freigabeposition ein Ende (312) des Arretierelementes (31) sich aus dem Gehäuse (32) der Arretierungseinrichtung (3) heraus- oder von diesem wegbewegt und auf den Dämpfungsabschnitt (42) auftrifft.

2. Überlagerungsantrieb nach Anspruch 1, **dadurch gekennzeichnet, dass** zumindest der Dämpfungsabschnitt (42) des Dämpfungselementes (4) elastisch ausgebildet ist.

3. Überlagerungsantrieb nach Anspruch 1 oder 2, **dadurch gekennzeichnet, dass** der Dämpfungsabschnitt (42) des Dämpfungselementes (4) beabstandet zu einem Bereich (323) des Gehäuses (32) angeordnet ist, in dem sich ein Teilabschnitt des Arretierelementes (31) erstreckt.

4. Überlagerungsantrieb nach einem der vorangehenden Ansprüche, **dadurch gekennzeichnet, dass** das Gehäuse (32) einen Befestigungsbereich (321) ausbildet, an dem das Dämpfungselement (4) festgelegt ist.

5. Überlagerungsantrieb nach Anspruch 4, **dadurch gekennzeichnet, dass** der Befestigungsbereich (321) in Form eines Vorsprunges ausgebildet ist.

6. Überlagerungsantrieb nach einem der vorangehenden Ansprüche, **dadurch gekennzeichnet, dass** das Dämpfungselement (4) einen Befestigungsabschnitt (41) aufweist, über den es an dem Gehäuse (32) der Arretierungseinrichtung (3) und/oder an einem Gehäuse (24) einer die zu arretierende bewegbare Komponente (33) umfassenden Vorrichtung festlegbar ist.

7. Überlagerungsantrieb nach Anspruch 6, **dadurch gekennzeichnet, dass** das Gehäuse (32) einen Befestigungsbereich (321) mit einer Durchgangsöffnung (322) aufweist, wobei der Befestigungsabschnitt (41) des Dämpfungselementes (4) eine umlaufende Nut (413) umfasst, in die ein Rand der Durchgangsöffnung (322) des Befestigungsbereichs (321) des Gehäuses (32) eingreift.

8. Überlagerungsantrieb nach Anspruch 7, **dadurch gekennzeichnet, dass** die umlaufende Nut (413) durch eine Seitenwand (411), die eine Durchgangsöffnung (412) des Befestigungsabschnitts (41) des Dämpfungselementes (4) begrenzt, ausgeformt wird.

9. Überlagerungsantrieb nach einem der Ansprüche 6 bis 8, **dadurch gekennzeichnet, dass** sich der Dämpfungsabschnitt (42) des Dämpfungselementes (4) unter einem Winkel zu dem Befestigungsabschnitt (41) des Dämpfungselementes (4) erstreckt.

10. Überlagerungsantrieb nach einem der vorhergehenden Ansprüche, **dadurch gekennzeichnet, dass** der Dämpfungsabschnitt (42) zwei zueinander beabstandete Schenkel (421, 422) aufweist, die über einen Verbindungsbereich (423) miteinander verbunden sind, wobei das Arretierelement (31) bei einer Bewegung in die Freigabeposition auf den Verbindungsbereich (423) auftrifft.

11. Überlagerungsantrieb nach Anspruch 10, **dadurch gekennzeichnet, dass** sich der Verbindungsbereich (423) unter einem Winkel zu dem Arretierelement (31) erstreckt.

12. Überlagerungsantrieb nach einem der Ansprüche 6 bis 11, **dadurch gekennzeichnet, dass** der Befestigungsabschnitt (41) des Dämpfungselementes (4) so ausgebildet ist, dass die Arretierungseinrichtung (3) über das Dämpfungselement (4) elastisch an einem Gehäuse (24) der Vorrichtung gelagert werden kann.

13. Überlagerungsantrieb nach einem der vorhergehenden Ansprüche, **dadurch gekennzeichnet, dass** die Arretierungseinrichtung (3) über das Dämpfungselement (4) elastisch an einem Gehäuse (24) des Überlagerungsantriebes (2) gelagert ist.

14. Überlagerungsantrieb nach Anspruch 13, **dadurch gekennzeichnet, dass** ein Befestigungselement (5) eine Durchgangsöffnung (322) eines Befestigungsbereiches (321) des Gehäuses (32) der Arretierungseinrichtung (3) sowie eine Durchgangsöffnung (412) eines Befestigungsabschnitts (41) des Dämpfungselementes (4) durch- und in eine Befestigungsöffnung des Gehäuses (24) des Überlagerungsantriebs (2) eingreift.

15. Überlagerungsantrieb nach einem der vorhergehenden Ansprüche, **dadurch gekennzeichnet, dass** sich die bewegbare Komponente (33) außerhalb eines Gehäuses (32) der Arretierungseinrichtung (3) befindet.

## Claims

1. A superposition drive for a superimposed steering system of a motor vehicle comprising a movable component (33) and a locking device (3), wherein the locking device (3) comprises
- a locking element (31) reciprocatable between a locking position and a release position, which in the locking position cooperates with the movable component (33);
- an actuator for moving the locking element (31) from a release position into a locking position or vice versa,
- wherein the actuator and the locking element (31) are arranged common in a housing of the locking device (3), wherein the actuator of the locking device (3) and at least a section of the locking bolt (31) working as locking element are located in the interior of a housing (32), wherein in the locking position the locking bolt (31) protrudes from a first opening (3220) of the housing (32) with a first end (311) and in a release position protrudes from a second opening (3221) with a second end (312); and
- a damping device which damps a movement of the locking element (31) into the release position, wherein the damping device includes a damping element (4) with a damping portion (42) which is located outside the housing (32) of the locking device (3),
**characterized in that**
the locking device (3) is designed such that during a movement of the locking element (31) into the release position, an end (312) of the locking element (31) moves out of the housing (32) of the locking device (3) or away from the same and impinges on the damping portion (42).

2. The superposition drive according to claim 1, **characterized in that** at least the damping portion (42) of the damping element (4) is elastically formed.

3. The superposition drive according to claim 1 or 2, **characterized in that** the damping portion (42) of the damping element (4) is arranged in a distance from a region (323) of the housing (32) in which a section of the locking element (31) extends.

4. The superposition drive according to any of the preceding claims, **characterized in that** the housing (32) forms a fixing region (321) at which the damping element (4) is fixed.

5. The superposition drive according to claim 4, **characterized in that** at least the fixing region (321) is formed as a protrusion.

6. The superposition drive according to any of the preceding claims, **characterized in that** the damping element (4) includes a fixing portion (41) via which it can be fixed at the housing (32) of the locking device (3) and/or at a housing (24) of an apparatus comprising the movable component (33) to be locked.

7. The superposition drive according to claim 6, **characterized in that** the housing (32) includes a fixing region (321) with a through opening (322), wherein the fixing portion (41) of the damping element (4) comprises a circumferential groove (413) into which an edge of the through opening (322) of the fixing region (321) of the housing (32) engages.

8. The superposition drive according to claim 7, **characterized in that** the circumferential groove (413) is formed by a side wall (411) which defines a through opening (412) of the fixing portion (41) of the damping element (4).

9. The superposition drive according to any of claims 6 to 8, **characterized in that** the damping portion (42) of the damping element (4) extends at an angle to the fixing portion (41) of the damping element (4).

10. The superposition drive according to any of the preceding claims, **characterized in that** the damping portion (42) includes two legs (421, 422) spaced from each other, which are connected with each other via a connecting region (423), wherein during a movement into the release position the locking element (31) impinges on the connecting region (423).

11. The superposition drive according to claim 10, **characterized in that** the connecting region (423) extends at an angle to the locking element (31).

12. The superposition drive according to any of claims 6 to 11, **characterized in that** the fixing portion (41) of the damping element (4) is formed in such a way that the locking device (3) can elastically be mounted on a housing (24) of the apparatus via the damping element (4).

13. The superposition drive according to any of the preceding claims, **characterized in that** the locking device (3) is elastically mounted on a housing (24) of the superposition drive (2) via the damping element (4).

14. The superposition drive according to claim 13, **characterized in that** a fixing element (5) reaches through a through opening (322) of a fixing region (321) of the housing (32) of the locking device (3) and through a through opening (412) of a fixing portion (41) of the damping element (4) and engages into a fixing hole of the housing (24) of the superposition drive (2).

15. The superposition drive according to any of the preceding claims, **characterized in that** the movable component (33) is located outside a housing (32) of the locking device (3).

## Revendications

1. Entraînement à superposition pour une direction à superposition d'un véhicule automobile avec un composant mobile (33) et un dispositif d'arrêt (3), dans lequel le dispositif d'arrêt (3) présente :
- un élément d'arrêt (31) mobile alternativement entre une position d'arrêt et une position de libération qui coopère dans la position d'arrêt avec le composant mobile (33) ;
- un actionneur pour le déplacement de l'élément d'arrêt (31) de la position de libération à la position d'arrêt ou inversement ;
- dans lequel l'actionneur et l'élément d'arrêt (31) sont agencés ensemble dans un boîtier (32) du dispositif d'arrêt (3), dans lequel l'actionneur du dispositif d'arrêt (3) et au moins une section partielle du boulon d'arrêt (31) agissant comme élément d'arrêt se trouvent à l'intérieur du boîtier (32), dans lequel le boulon d'arrêt (31) dépasse en position d'arrêt avec une première extrémité (311) d'une première ouverture (3220) du boîtier (32) et en position de libération avec une seconde extrémité (312) d'une seconde ouverture (3221) ; et
- un dispositif d'amortissement qui amortit un mouvement de l'élément d'arrêt (31) dans la position de libération, dans lequel le dispositif d'amortissement présente un élément d'amortissement (4) avec une section d'amortissement (42) qui se trouve en dehors du boîtier (32) du dispositif d'arrêt (3),
**caractérisé en ce que**
le dispositif d'arrêt (3) est de nature telle que lors d'un mouvement de l'élément d'arrêt (31) dans la position de libération, une extrémité (312) de l'élément d'arrêt (31) se déplace du boîtier (32) du dispositif d'arrêt (3) hors ou loin de celui-ci et atteint la section d'amortissement (42).

2. Entraînement à superposition selon la revendication 1, **caractérisé en ce qu'**au moins la section d'amortissement (42) de l'élément d'amortissement (4) est réalisée de manière élastique.

3. Entraînement à superposition selon la revendication 1 ou 2, **caractérisé en ce que** la section d'amortissement (42) de l'élément d'amortissement (4) est agencée à distance d'une zone (323) du boîtier (32), dans laquelle une section partielle de l'élément d'arrêt (31) s'étend.

4. Entraînement à superposition selon l'une des revendications précédentes, **caractérisé en ce que** le boîtier (32) réalise une zone de fixation (321), sur laquelle l'élément d'amortissement (4) est fixé.

5. Entraînement à superposition selon la revendication 4, **caractérisé en ce que** la zone de fixation (321) est réalisée sous la forme d'une saillie.

6. Entraînement à superposition selon l'une des revendications précédentes, **caractérisé en ce que** l'élément d'amortissement (4) présente une section de fixation (41), par le biais de laquelle il peut être fixé sur le boîtier (32) du dispositif d'arrêt (3) et/ou sur un boîtier (24) d'un dispositif comprenant le composant mobile (33) à arrêter.

7. Entraînement à superposition selon la revendication 6, **caractérisé en ce que** le boîtier (32) présente une zone de fixation (321) avec une ouverture de passage (322), dans lequel la section de fixation (41) de l'élément d'amortissement (4) comprend une rainure tournante (413), avec laquelle un bord de l'ouverture de passage (322) de la zone de fixation (321) du boîtier (32) vient en prise.

8. Entraînement à superposition selon la revendication 7, **caractérisé en ce que** la rainure tournante (413) est formée par une paroi latérale (411) qui délimite une ouverture de passage (412) de la section de fixation (41) de l'élément d'amortissement (4).

9. Entraînement à superposition selon l'une des revendications 6 à 8, **caractérisé en ce que** la section d'amortissement (42) de l'élément d'amortissement (4) s'étend selon un angle par rapport à la section de fixation (41) de l'élément d'amortissement (4).

10. Entraînement à superposition selon l'une des revendications précédentes, **caractérisé en ce que** la section d'amortissement (42) présente deux branches (421, 422) espacées l'une de l'autre qui sont reliées entre elles par le biais d'une zone de liaison (423), dans lequel l'élément d'arrêt (31) atteint la zone de liaison (423) lors d'un mouvement dans la position de libération.

11. Entraînement à superposition selon la revendication 10, **caractérisé en ce que** la zone de liaison (423) s'étend selon un angle par rapport à l'élément d'arrêt (31).

12. Entraînement à superposition selon l'une des revendications 6 à 11, **caractérisé en ce que** la section de fixation (41) de l'élément d'amortissement (4) est réalisée de sorte que le dispositif d'arrêt (3) puisse être logé élastiquement sur un boîtier (24) du dispositif par le biais de l'élément d'amortissement (4).

13. Entraînement à superposition selon l'une des revendications précédentes, **caractérisé en ce que** le dispositif d'arrêt (3) est logé élastiquement sur un boîtier (24) de l'entraînement à superposition (2) par le biais de l'élément d'amortissement (4).

14. Entraînement à superposition selon la revendication 13, **caractérisé en ce qu'**un élément de fixation (5) traverse une ouverture de passage (322) d'une zone de fixation (321) du boîtier (32) du dispositif d'arrêt (3) ainsi qu'une ouverture de passage (412) d'une section de fixation (41) de l'élément d'amortissement (4) et vient en prise avec une ouverture de fixation du boîtier (24) de l'entraînement à superposition (2).

15. Entraînement à superposition selon l'une des revendications précédentes, **caractérisé en ce que** le composant mobile (33) se trouve en dehors d'un boîtier (32) du dispositif d'arrêt (3).
